# EUROPÄISCHE PATENTANMELDUNG

(11) **EP 1 761 071 A1**
(43) Veröffentlichungstag der Anmeldung: **07.03.2007**
(21) Anmeldenummer: 05018711.1
(22) Anmeldetag: 29.08.2005
(51) Int. Cl.: H04N 9/04

(54) **Verfahren zur Aufnahme eines Bildes und Digitalkamera**

(71) Anmelder: Gerd Stueckler, 83684 Tegernsee (DE)
(72) Erfinder: Gerd Stueckler, 83684 Tegernsee (DE)
(74) Vertreter: Kudlek, Franz Thomas

(57) **Zusammenfassung**

Erfindungsgemäß wird ein Verfahren zur Aufnahme eines Bildes mit einer Digitalkamera (1; 1'; 1''; 2; 3), wobei ein von einem Objektiv (10) erfasstes Bild über einen Bildverteiler (30; 30'; 30''; 31; 32, 33) auf wenigstens zwei optoelektronische Bildsensoren (61, 62, 63) projiziert wird, vorgeschlagen, wobei von den wenigstens zwei optoelektronischen Bildsensoren (61, 62, 63) im wesentlichen gleichzeitig oder nacheinander wenigstens zwei nicht identische Zwischenbilder (71, 72, 73) erzeugt werden. Weiterhin wird eine entsprechend ausgestaltete Digitalkamera vorgeschlagen. Mittels der erfindungsgemäßen Lösung kann der Betrieb einer Digitalkamera verbessert und vereinfacht werden.

## Beschreibung

Die Erfindung betrifft ein Verfahren zur Aufnahme eines Bildes nach dem Oberbegriff des Patentanspruchs 1 sowie eine Digitalkamera nach dem Oberbegriff des Patentanspruchs 8.

Im nachfolgenden wird im wesentlichen auf Filmkameras bezug genommen, ohne dass die Erfindung darauf beschränkt wäre. Es versteht sich, dass das erfindungsgemäße Verfahren z. B. ebenso für Fotokameras anwendbar ist.

### Stand der Technik

Zum gegenwärtigen Zeitpunkt sind Kameras, insbesondere Filmkameras, mit zwei prinzipiell unterschiedlichen Funktionsweisen erhältlich. Zum einen sind die analogen Kameras seit langem bekannt, bei denen ein Bild oder ein Film (Bewegtbild) auf einem chemischen Film aufgenommen wird. Zum anderen gibt es seit einiger Zeit Digitalkameras, bei denen optoelektronische Bildsensoren zur Aufnahme und Erzeugung von Bildern verwendet werden.

Digitalkameras bieten den Vorteil, dass z.B. aufgenommene Bilder oder Filmszenen unmittelbar im Anschluss an die Aufnahme auf einer zugehörigen Anzeige betrachtet werden können. Da die Bilder oder Filmszenen bereits in digitaler Form abgespeichert werden, können sie ebenfalls leicht, beispielsweise mittels herkömmlicher Computer, nachbearbeitet werden. Trotz dieser genannten und weiterer Vorteile haben sich Digitalkameras bisher hauptsächlich im Amateur- und Fernsehbereich durchgesetzt. Professionelle Filmprojekte, wie z. B. Kinofilme, werden weiterhin mit herkömmlichen Filmkameras mit chemischem Film durchgeführt, da digitale Filmkameras gewichtige Nachteile aufweisen.

Im Gegensatz zu herkömmlichen Kameras können Digitalkameras mit den heute erhältlichen optoelektronischen Bildsensoren nur einen relativ geringen Kontrastumfang aufzeichnen. Die erreichbaren Helligkeitsunterschiede reichen von ca. 1:30 bei Amateurkameras bis zu 1:100 bei professionellen Videokameras, wohingegen Filmkameras mit chemischem Film Helligkeitsunterschiede von weit über 1:1000 aufzeichnen. Bei nicht optimal ausgeleuchteten Szenen, wie sie z.B. Dokumentarfilmer häufig vorfinden, gehen dunkle oder helle Details einer Szene unwiederbringlich verloren.

Auch erfordern Digitalkameras, je nach Bauart, bestimmte, meist teuere Objektive. Bspw. erfordern Digitalkameras mit Strahlenteiler-Prismen spezielle Objektive, die die von den Prismen verursachten Bildfehler korrigieren. Weiterhin können z.B. Objektive für 16 mm- oder 35 mm-Film oder Objektive für Spiegelreflexkameras, die billiger, aber optisch hochwertiger als prismenkorrigierte Objektive sind, nicht für derartige Digitalkameras verwendet werden.

Ein weiterer erheblicher Nachteil der digitalen Filmkameras liegt in der häufig unbefriedigenden Bewegungsunschärfe. Im Gegensatz zu herkömmlichen Filmkameras mit z.B. rotierendem Spiegelverschluss werden bei den heutigen digitalen Filmkameras nicht alle Bildpunkte bzw. Pixel der Bildsensoren gleichzeitig belichtet. Vielmehr erfolgt aufgrund der Betriebsweise der digitalen Sensoren die Belichtung zeilenweise, beispielsweise von links oben nach rechts unten, wodurch die Geometrie bewegter Objekte verzerrt und die Bewegungsunschärfe zusätzlich verringert wird. Dieser unangenehme Effekt wird durch die bei Kinofilmen verwendete niedrige Bildrate von 24 Bilder pro Sekunde zusätzlich verstärkt.

Auch das Fehlen eines optischen Suchers wirkt sich nachteilig aus. Die meisten digitalen Filmkameras weisen elektronische Sucher auf, bei denen das von den Bildsensoren aufgenommene Bild auf einem Display dargestellt wird, welches eine unzureichende Schärfe hat. Außerdem hat der Kameramann in der Regel keine Möglichkeit, rechtzeitig zu erkennen, dass ein unerwünschter Gegenstand, wie z.B. ein Mikrofon, in den aufgenommenen Bildausschnitt gerät.

Es stellt sich daher das Problem, ein Verfahren und eine Vorrichtung anzugeben, um den Betrieb von Digitalkameras, insbesondere in Anbetracht der oben aufgeführten Nachteile, zu verbessern.

Erfindungsgemäß werden ein Verfahren mit den Merkmalen des Patentanspruchs 1 sowie eine Digitalkamera mit den Merkmalen der Patentansprüche 8 und 9 vorgeschlagen. Vorteilhafte Ausgestaltungen ergeben sich jeweils aus den Unteransprüchen und der nachfolgenden Beschreibung.

Vorteile der Erfindung

Bei der Erfindung werden von den wenigstens zwei optoelektronischen Bildsensoren wenigstens zwei nicht identische Vollfarb-Zwischenbilder erzeugt bzw. sind wenigstens zwei nicht identische Vollfarb-Zwischenbilder erzeugbar. Unter Vollfarbbild ist ein im wesentlichen alle Farben des sichtbaren Spektrums aufweisendes Bild zu verstehen.

Unter "Zwischenbilder erzeugen" ist zu verstehen, dass ein Vollfarb-Zwischenbild gemäß der vorliegenden Erfindung von einem Vollfarb-Bildsensor, wie z.B. einem Bayer-Sensor oder einem FOVEON X3-Bildsensor, aufgenommen und damit gleichzeitig erzeugt werden kann bzw. erzeugbar ist, aber ebenso, wenn mehr als zwei optoelektronische Bildsensoren vorgesehen sind, von zwei Teilfarb-Bildsensoren (z.B. Grün + Rot/Blau) aufgenommen und als Summe der Farbinformationen erzeugt werden kann bzw. erzeugbar ist.

Sind bei der Erfindung mehr als zwei Bildsensoren vorgesehen, sind mehr als zwei oder genau zwei nicht identische Vollfarb-Zwischenbilder erzeugbar, wobei beispielsweise ein Vollfarb-Zwischenbild von einem Vollfarb-Bildsensor und ein weiteres Vollfarb-Zwischenbild von zwei Teilfarb-Bildsensoren (z.B. Grün + Rot/Blau) erzeugt werden kann bzw. erzeugbar ist. Es ist möglich, dass die zwei nicht identischen Vollfarb-Zwischenbilder im wesentlichen gleichzeitig oder nacheinander von den Bildsensoren erzeugt werden. In einer besonders bevorzugten Ausführungsform der Erfindung sind genau zwei oder genau drei Vollfarb-Bildsensoren vorgesehen.

Mit der Bereitstellung von wenigstens zwei nicht identischen Vollfarb-Zwischenbildern sind wesentliche Vorteile verknüpft, wie sie im folgenden erläutert werden.

Vorteilhafterweise werden bei einem Aspekt der Erfindung wenigstens zwei Zwischenbilder zu einem Ergebnisbild verarbeitet. Dies kann beispielsweise in einer Recheneinheit innerhalb der Kamera, aber auch in einer Recheneinheit außerhalb der Kamera durchgeführt werden. Das Ergebnisbild verfügt vorteilhaft über weit mehr Informationen (Farbe, Helligkeitsbereich, Auflösung usw.) als jedes Zwischenbild für sich genommen. Damit kann der Betrieb einer Kamera deutlich verbessert werden.

Zweckmäßigerweise werden bei dem erfindungsgemäßen Verfahren das Ergebnisbild und/oder wenigstens ein Zwischenbild weiteren Einrichtungen, insbesondere innerhalb der Kamera, insbesondere Einrichtungen zur Speicherung und/oder Aufzeichnung, zur Darstellung in einer Anzeige, insbesondere Sucheranzeige, zur Verfügung gestellt.

In einer besonders bevorzugten Ausführungsform der Erfindung werden wenigstens zwei Zwischenbilder mit unterschiedlichen Helligkeitswerten erzeugt bzw. sind erzeugbar. Dies kann z.B. durch verschiedene Belichtungszeiten und -stärken, durch die Anordnung der optischen Bauteile, durch Einstellen der Verschlusszeiten, durch Verwenden von Neutralfiltern, durch verschiedene elektronische Sensoreinstellungen usw. erreicht werden. Der Begriff "Helligkeitswerte" soll im weiteren erläutert werden. Wird ein Bild (Szene) von einem Objektiv erfasst, tritt in das Objektiv eine bestimmte Helligkeit bzw. Beleuchtungsstärke (Szenenhelligkeit), die normalerweise in Lux gemessen wird. Wird dieses Szenenbild auf einen optischen Sensor projiziert, erzeugt dieser ein Zwischenbild mit normalerweise an allen Pixeln unterschiedlichen Helligkeitswerten. Ein 12 bit-Sensor erzeugt Helligkeitswerte von 0 bis 4095. Wird das erfasste Bild über einen Strahlteiler gleichmäßig auf zwei gleiche Bildsensoren verteilt, liefern beide, unter idealen Voraussetzungen, gleiche Helligkeitswerte an gleichen Pixelstellen. Dies wird im Sinne dieser Erfindung als Zwischenbilder mit gleichen Helligkeitswerten beschrieben. Wird nun unter ansonsten gleichen Voraussetzungen ein Sensor mit weniger Helligkeit bestrahlt, beispielsweise nur mit der Hälfte, so liefert er auch nur halbe Helligkeitswerte (bei linearem Zusammenhang, ebenso ist ein logarithmischer oder andersartiger Zusammenhang denkbar). Dies wird als Zwischenbilder mit unterschiedlichen Helligkeitswerten beschrieben.

Hierdurch ist es möglich, einen erhöhten Kontrastumfang im Ergebnisbild zu erreichen. Obwohl optoelektronische 12 bit-Bildsensoren theoretisch Helligkeitsunterschiede von 1:4096 ausgeben können, sind niedrige Werte im Bereich von z.B. < 32 meist unbrauchbar, da sie stark fehlerbehaftet sind, ihnen ein starkes Rauschen überlagert ist und für geringe Helligkeits-Zahlenwerte ein zu großer Helligkeitssprung von Wert zu Wert erfolgt. Der erhältliche Kontrastumfang liegt dann in diesem Fall nur noch bei 1:128. Helligkeitswerte über der Digitalisierungsgrenze, im vorliegenden Beispiel 12 bit=4096, sind vollkommen unbrauchbar. Bei der vorteilhaften Ausführungsform des erfindungsgemäßen Verfahrens werden nun zwei Zwischenbilder mit unterschiedlichen Helligkeitswerten erzeugt. Es bietet sich an, dass ein Bildsensor vor allem dunkle Bildbereiche optimal aufnimmt und ein anderer Bildsensor vor allem helle Bildbereiche optimal aufnimmt. Hierzu kann z.B. ein Bildsensor auf eine vierfache Vorverstärkung zur bevorzugten Aufnahme dunkler Bildbereiche eingestellt werden, wobei dem anderen Bildsensor bspw. mittels des Bildverteilers nur ein Viertel der Lichtmenge zugewiesen wird. Das aus diesen beiden Zwischenbildern erzeugte Ergebnisbild weist dann einen Kontrastbereich von 1:2048 auf, wenn ein einzelner Bildsensor einen ausnutzbaren Kontrastumfang von 1:128 aufweist (1:128 x 4 x 4). Zur Erzeugung des Ergebnisbildes werden die um den Faktor 16 korrigierten Daten eines Bildes in das andere insbesondere linear oder nach einer anderen Gewichtung eingerechnet.

In einer ebenso bevorzugten Ausführungsform der Erfindung werden wenigstens zwei Zwischenbilder mit unterschiedlichen Ausschnitten des erfassten Bildes erzeugt bzw. sind erzeugbar. Darunter ist zu verstehen, dass die Zwischenbilder unterschiedliche Ausschnitte des erfassten Bildes darstellen. Insbesondere können die optoelektronischen Bildsensoren, wenn es sich um Bayer-Sensoren handelt, z.B. um ein Pixel horizontal oder vertikal oder um ein halbes Pixel diagonal gegeneinander verschoben sein. Ebenso kann ein optisches Bauteil entsprechend ausgerichtet sein. Hierdurch enthält ein Zwischenbild gerade Informationen über Szenenbildpunkte, die die weiteren Zwischenbilder nicht haben. Da diese entsprechend andere Informationen aufweisen, die wiederum das erste Zwischenbild nicht hat, lässt sich durch Kombination ein Ergebnisbild mit erhöhtem Informationsgehalt, insbesondere mit erhöhter Schärfe, erzeugen.

Bei Bayer-Sensoren erfassen die lichtempfindlichen Zellen nur Helligkeitswerte. Um Farbinformationen zu erhalten, ist jeder einzelnen Zelle ein Farbfilter in einer der drei Grundfarben rot, grün oder blau vorgeschaltet. Die Filteranordnung ist dabei beispielsweise für die ungeraden Zeilen blau, grün, blau, grün, ... und für die geraden Bildzeilen grün, rot, grün, rot, ... .

Wenn ein solcher Sensor um ein Pixel horizontal oder vertikal gegenüber dem anderen Sensor versetzt wird, enthält jede Ergebnisbildspalte bzw. -zeile dann die Pixel blau/grün, rot/grün, blau/grün, rot/grün, ... . Da grün stets auch einen gewissen Blau- bzw. Rot-Anteil enthält und blau bzw. rot stets einen gewissen Grün-Anteil, lässt sich für jede Pixelposition der jeweils fehlende Farbanteil näherungsweise errechnen, ohne auf Nachbarpixel zurückgreifen zu müssen. Damit können für jede einzelne Pixelposition alle BGR-Farbanteile rekonstruiert werden. Das Ergebnisbild weist daher die Pixelanzahl bzw. Schärfe des gesamten Sensors auf.

Ebenso ist es möglich, die Pixelverschiebung mit der Erzeugung unterschiedlicher Helligkeitswerte zu verbinden. Werden drei Bayer-Bildsensoren verwendet, bietet es sich an, einen Bildsensor für dunkle Bildbereiche und zwei Bildsensoren für helle Bildbereiche zu verwenden, wobei die beiden Bildsensoren für helle Bildbereiche um ein Pixel horizontal oder vertikal zueinander verschoben sind. Damit kann ein Bild mit voller Schärfe für die hellen Bildbereiche erzeugt werden. Wird der Sensor für die dunklen Bildbereiche um ein halbes Pixel diagonal verschoben, können die fehlenden Farbpixel besser rekonstruiert werden. Die Verschiebung um ein halbes Pixel (in eine beliebige Richtung) bietet sich auch für Vollfarb-Bildsensoren an, die an einer Pixelposition alle Farben registrieren können (z.B. FAVEON X3), da somit eine höhere Schärfe erreicht werden kann.

Zweckmäßigerweise werden bei dem erfindungsgemäßen Verfahren mehrere Bilder in zeitlicher Abfolge aufgenommen. Damit ist es möglich, einen Film mit einer vorgebbaren Bildrate (Anzahl der dargestellten (Ergebnis)-Bilder pro Zeiteinheit, z.B. pro Sek.) zu erhalten. Es kann vorgesehen sein, die Zwischenbilder mit einer dem späteren Film entsprechenden, einer doppelten, einer dreifachen usw. Bildrate zu erzeugen. Damit kann die Bewegungsunschärfe vorteilhaft verbessert werden.

Zweckmäßigerweise werden bei der Erfindung Bildsensoren mit im wesentlichen identischen Parametern (bzw. gleiche Bildsensoren) verwendet. Darunter sind insbesondere die Parameter Pixelanzahl, Pixeldichte und Farbeigenschaften zu zählen. Es kann vorgesehen sein, erforderliche Farbkorrekturwerte mittels Weißabgleichs oder herstellerseitig zu ermitteln und bei der Bildverarbeitung zu berücksichtigen. Damit kann sichergestellt werden, dass das Ergebnisbild nach der Erzeugung aus den Zwischenbildern durch die Bildverarbeitung einen für alle Helligkeitsbereiche gleichen Farbcharakter aufweist.

Erfindungsgemäß wird auch eine Digitalkamera, insbesondere Foto- und Filmkamera, zur Aufnahme eines von einem Kameraobjektiv erfassten Bildes vorgeschlagen, die ein erfindungsgemäßes Verfahren durchführt.

Bezüglich aller beschriebenen Ausführungsformen einer erfindungsgemäßen Digitalkamera sei ausdrücklich auf die entsprechenden Erläuterungen und Vorteile des erfindungsgemäßen Verfahrens verwiesen.

In einer besonders bevorzugten Ausführungsform der erfindungsgemäßen Kamera sind genau zwei oder genau drei Vollfarb-Bildsensoren vorgesehen.

Es ist von Vorteil, wenn bei der erfindungsgemäßen Digitalkamera der Bildverteiler als Prisma mit wenigstens zwei Bildausgängen ausgebildet ist. Ein Prisma kann beispielsweise derart ausgebildet werden, dass Licht unterschiedlicher Wellenlänge jeweils in unterschiedlichen Ebenen hinter den wenigstens zwei Bildausgängen abgebildet wird. Insbesondere ist es vorteilhaft, wenn die optische Länge des Prismas der optischen Länge herkömmlicher HD-Prismen entspricht und es den Blauanteil des Bildes um 5 µm und den Rotanteil um 10 µm vor den Grünanteil abbildet. Somit können vorteilhafterweise herkömmliche HD-Objektive herkömmlicher 3-Einfarben-Sensor-HD-Kameras verwendet werden, da die herkömmlichen HD-Objektive für die bisherigen 3-Sensor-HD-Kameras so konstruiert sind, dass die Blau/Grün/Rot-Anteile des von ihnen erzeugten Bildes nicht in einer Ebene liegen. Der Blauanteil wird um 5 µm und der Rotanteil um 10 µm hinter dem Grünanteil abgebildet, da der Abstand zwischen Prismeneintritt und Blau-Sensor um 5 µm größer und zwischen Prismeneintritt und Rot-Sensor um 10 µm größer definiert ist als der Abstand zwischen Prismeneintritt und Grün-Sensor. Die für die bisherigen Prismen-Kameras für Fernsehen verwendeten Objektive oder andere Objektivklassen haben andere Werte. Es kann ebenso vorgesehen sein, ein Prisma derart auszubilden, dass Licht unterschiedlicher Wellenlänge jeweils in derselben Ebene hinter den wenigstens zwei Bildausgängen abgebildet wird. Damit können Objektive verwendet werden, die die oben genannte Farbaufteilung der Abbildungsebenen nicht aufweisen.

Es ist zweckmäßig, das Prisma je nach Anzahl der verwendeten Bildsensoren auszugestalten. Sind beispielsweise genau zwei Vollfarb-Bildsensoren vorgesehen, sollte das Prisma eine weitgehend farbneutrale Aufteilung vornehmen. Sind hingegen neben einem Vollfarb-Bildsensor weitere Teilfarb-Bildsensoren vorgesehen, kann ein Prisma zweckmäßigerweise einen Vollfarb- und entsprechende weitere Teilfarb-Bildausgänge aufweisen. Angesichts der Platzverhältnisse innerhalb einer Kamera sind vorzugsweise nicht mehr als insgesamt drei Bildsensoren vorzusehen. Weiterhin kann das Prisma, alternativ oder zusätzlich zu der beschriebenen Farbverteilung, auch eine Helligkeitsverteilung gemäß einem vorgebbaren Intensitätsverhältnis vornehmen. Dadurch kann der an anderer Stelle erläuterte erhöhte Kontrastumfang leicht realisiert werden.

Gemäß einer bevorzugten Ausführungsform der erfindungsgemäßen Digitalkamera ist ein insbesondere rotierender Verschluss zwischen dem Objektiv und den wenigstens zwei optoelektronischen Bildsensoren vorgesehen, insbesondere zwischen dem Objektiv und dem Bildverteiler. Damit ist auf einfache Weise eine gute Bewegungsunschärfe erzielbar, da hiermit bei den üblichen Bildsensoren eine im wesentlichen gleichzeitige Belichtung aller Pixel aller Sensoren erzielt werden kann, womit die erreichbare Bewegungsunschärfe z.B. nahezu der von chemischen Film verwendenden Kameras mit rotierendem Spiegelverschluss entspricht. Eine Belichtungszeit eines optoelektronischen Bildsensors ist durch manuelle oder elektronische Verstellung eines Sektor-Öffnungswinkels einer dem Verschluss zugehörigen Sektorblende beeinflussbar.

Gemäß einer ebenso bevorzugten Ausführungsform der erfindungsgemäßen Digitalkamera ist der Bildverteiler als ein rotierendes Spiegelrad mit einer vorgebbaren Anordnung und Anzahl von aufeinanderfolgenden Spiegelsegmenten und Lückensegmenten ausgebildet. Zusätzlich kann zur Einstellung der Belichtung der Bildsensoren wenigstens eine feste oder verstellbare Sektorblende vorgesehen sein, welche kegelförmig und mit dem Spiegelrad verbunden oder parallel zu den Sensorebenen und synchron zu den Spiegelsegmenten rotierend ausgebildet sein kann. Zusätzlich oder optional kann das Spiegelrad vorteilhaft mit einer parallel liegenden, mitrotierbaren Blende versehen sein. Durch das Spiegelrad kann ein Strahlenteilerprisma vermieden werden, welches prinzipiell erhebliche optische Fehler verursacht, welche auf aufwendige Weise von speziell für Prismen konstruierten (und damit sehr teuren) Objektiven korrigiert werden müssen. Daher sind normale Objektive nicht nur preisgünstiger, sondern auch optisch besser. Ein teildurchlässiger feststehender Spiegel kann ebenso vorgesehen sein, verschlechtert aber die Abbildungsqualität aufgrund seiner Neigung relativ zur Sensoroberfläche. Zur Erzielung einer guten Bewegungsunschärfe ist dann zusätzlich ein externer rotierender mechanischer Verschluss vorzusehen, solange elektronisch steuerbare unbewegliche optische Verschlüsse eine zu hohe Lichtabsorption aufweisen

Vorteilhafterweise ist bei der erfindungsgemäßen Digitalkamera der Bildverteiler als zwei synchron rotierende und mit verspiegelten Zähnen berührungslos ineinander greifende Zahnräder ausgebildet, wobei durch deren Verzahnungslücken ständig ein weiteres Bild projizierbar ist. Zur Einstellung der Belichtung der Bildsensoren können zwei feste oder verstellbare Sektorblenden vorgesehen sein, welche kegelförmig und mit den Spiegelrädern verbunden oder parallel zu den Sensorebenen und synchron zu den Spiegelzähnen rotierend ausgebildet sind. Durch die Verzahnungslücken kann zusätzlich zur Bildverteilung auf zwei Sensoren ein optischer Sucher realisiert werden, welcher erhebliche Vorteile gegenüber elektronischen Suchern bietet, insbesondere eine größere Schärfe und Verwendbarkeit auch bei ausgeschalteter Kamera. Anders als bei herkömmlichen Filmkameras mit rotierendem Spiegelverschluss zur Ausblendung eines Bildes in den optischen Sucher muss hier das Spiegelrad in keine bestimmte Stellung gebracht werden, um ein Sucherbild zu sehen, solange die Breite eines Spiegelzahnes kleiner als der Durchmesser der rückwärtigen Objektivlinse ist.

Es ist besonders zweckmäßig, wenn der Winkelbereich, den die Spiegel- und Lückensegmente bzw. die Spiegelzähne und Spiegelzahnlücken ausfüllen, konstruktiv vorgebbar ist. Die genannten Winkelbereiche können so schmal ausgebildet werden, dass während einer (verstellbaren) Verschluss-Sektoröffnung mehrere Winkelbereiche nacheinander bestrahlt werden. Auf diese Weise werden um so mehr Winkelbereiche bestrahlt, desto weiter der Verschluss-Sektor geöffnet ist. Somit wird zum einen, insbesondere bei weitest möglicher Öffnung und damit längster Belichtungszeit, das erfasste Bild mehrfach und quasi gleichzeitig auf beide Bildsensoren verteilt und zum anderen durch das Verhältnis der Spiegelzahnbreiten bzw. der Spiegel-/Lückensegmente vorgegeben, in welchem Verhältnis das vorhandene Licht auf die beiden Sensoren und evtl. den optischen Sucher verteilt wird. Durch die Wahl des Breitenverhältnisses zwischen Spiegelsegmenten und Lückensegmenten bzw. zwischen Spiegelzähnen untereinander und Lücken kann erreicht werden, dass die Sensoren eine unterschiedliche Lichtmenge erhalten und damit dem für die dunklen Bildbereiche zu optimierenden Sensor ein besonders großer Anteil vom vorhanden Licht zur Verfügung steht. Für eine gute Bewegungsunschärfe ist es erforderlich, dass beide Sensoren möglichst gleichzeitig belichtet werden. Durch die hier erreichte abwechselnde Mehrfachbelichtung der Sensoren während einer normalen Belichtungsdauer von einer halben Bildratendauer wird eine praktisch gleichzeitige Belichtung erreicht. Bewegte Objekte werden dadurch allerdings mit Mehrfachkonturen aufgenommen, wobei aber durch deren mehrfache optische Überlagerung wieder eine akzeptable Gleichmäßigkeit der Unschärfe bewirkt wird.

Bevorzugterweise ist bei einer erfindungsgemäßen Digitalkamera wenigstens eine feste oder verstellbare Blende, insbesondere Sektorblende, zur Einstellung der Belichtung der Bildsensoren vorgesehen, deren Ausgestaltung und Vorteile weiter oben bereits beschrieben wurde.

Besonders vorteilhaft ist bei einer erfindungsgemäßen Digitalkamera eine Zwischenoptik zwischen dem Objektiv und den wenigstens zwei optoelektronischen Sensoren vorgesehen. Ebenso können zwei Zwischenoptiken zwischen dem/den Verschlüssen/Sektorblenden und den Bildsensoren vorgesehen sein, wobei diese zum einen das vom Objektiv projizierte Abbild der verwendeten Bildsensorgröße anpassen und zum anderen je nach Typ Raum für Spiegel, Verschlüsse, Sektorblenden, Filter etc. schaffen können.

Dies ist ein wichtiger Aspekt, da die Objektive für S16/S35 mm Kameras für eine Bildbreite von 12,4/24,9 mm ausgelegt sind, wohingegen gute und preiswerte Bildsensoren momentan vor allem mit einer Bildbreite von 9,6 mm erhältlich sind. Wenn also eine Zwischenoptik das vom S16/S35-Objektiv erzeugte Bild auf 77% bzw. 39% verkleinert, wird mit diesen Objektiven der gleiche Bildwinkel aufgenommen, wie bei den analogen Filmkameras.

Ebenso vorteilhaft kann durch entsprechende Zwischenoptikwahl ein größerer Raum für Spiegel und Verschlüsse geschaffen werden. Wird eine Zwischenoptik vor die Spiegel gesetzt, so füllt sie außerdem den von den Spiegeln eingeschlossenen Raum vor der Kamera aus, so dass die Verwendung der Film-Objektive durch den/die Spiegel weniger behindert wird.

Weiterhin wird durch die Verwendung wenigstens einer Zwischenoptik eine nahezu den S16/S35-Kameras entsprechende (vom Objektiv-Blendenwert abhängige) Tiefenschärfe erreicht.

Eine Zwischenoptik führt nicht zu einem Schärfeverlust, da die Auflösung der S16/S35-Objektive entsprechend 1/Verkleinerungsfaktor um das 1,29/2,59-fache erhöht wird. Da S16/S35mm Objektive auf 12,4/24,9 mm Bildbreite leicht 1920 Linien auflösen, bleibt diese Anzahl dann auch auf der Sensorbildbreite von 9,6 mm erhalten, so dass Sensoren mit 1920x1080 Pixeln nahezu die gleiche Schärfe wie echte S16/S35-Kameras erreichen.

Daraus ergibt sich ein entsprechender Lichtgewinn, da der Lichteintritt bei S16/S3S-Objektiven wesentlich größer als bei speziell für 9,6mm Sensoren gebauten Objektiven ist, was die geringere Lichtempfindlichkeit kleinerer Bildsensoren ausgleichen kann.

Durch die Verwendung einer Zwischenoptik stehen, insbesondere auch für kleine Bildsensoren, mehr Objektive, welche darüber hinaus optisch besser und preiswerter sind, zur Verfügung als für die üblichen Prismenkameras für 3-Einfarb-Sensoren.

In einer bevorzugten Ausführungsform der erfindungsgemäßen Digitalkamera ist eine Steuereinrichtung zur Steuerung der wenigstens zwei optoelektronischen Bildsensoren und/oder der rotierenden Verschlüsse und/oder der Sektorblenden vorgesehen. Damit kann auf einfache Weise erreicht werden, dass diese Bauteile entsprechend einer gewünschten Bildrate gesteuert und synchronisiert werden, wobei für Bildsensoren mit einem elektronischen Pseudo-Global-Verschluss die Sensoren während der Dauer des Datenauslesens des zuvor aufgenommenen Bildes von dem/den Verschlüssen/Sektorblenden abgedunkelt und erst anschließend erneut belichtet werden und wobei die Bildsensor-Belichtungszeit durch manuelle oder elektronische Verstellung des Sektor-Öffnungswinkels beeinflussbar ist. Bei rotierenden Verschlüssen sollten die verwendeten Bildsensoren einen Pseudo-Global-Verschluss aufweisen, welcher es erlaubt, die einzelnen Sensorpixel auch nach dem sequentiellen Auslesen ihrer Belichtungsdaten der vorhergehenden Bildaufnahme mit anschließendem Reset und Beginn einer neuen Lichtintegration weiterhin zu belichten. Die üblichen Sensoren mit Roll-Verschluss nehmen ein Bild Zeile für Zeile nacheinander auf, wobei sich dieser Vorgang über bis zu zwei Bildzeiten hinweg erstreckt (während z.B. die dritte und folgende Zeilen noch belichtet werden, wird bereits die erste Zeile des nächsten Bildes aufgenommen usw.).

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand mehrerer Ausführungsbeispiele in der Zeichnung schematisch dargestellt und wird im folgenden unter Bezugnahme auf die Zeichnung ausführlich beschrieben.

### Figurenbeschreibung

Im folgenden zeigt
- Figur 1: ein Ausführungsbeispiel einer erfindungsgemäßen Kamera mit einem Prisma zur Bildverteilung auf zwei Vollfarb-Bildsensoren, einem elektronischen Verschluss und einem elektronischen Sucher;
- Figur 2: ein Ausführungsbeispiel einer erfindungsgemäßen Kamera mit einem Prisma zur Bildverteilung auf drei Vollfarb-Bildsensoren, einem mechanischen Verschluss und einem elektronischen Sucher;
- Figur 3: ein Ausführungsbeispiel einer erfindungsgemäßen Kamera mit einem Prisma zur Bildverteilung auf einen optischen Sucher und zwei Vollfarb-Bildsensoren und mit zwei mechanischen Verschlüssen;
- Figur 4: ein Ausführungsbeispiel einer erfindungsgemäßen Kamera mit einem rotierendem Spiegelrad zur Bildverteilung auf zwei Vollfarb-Bildsensoren, zwei rotierenden Verschlüssen und einem elektronischen Sucher; und
- Figur 5: ein Ausführungsbeispiel einer erfindungsgemäßen Kamera mit zwei rotierenden Spiegel-Zahnrädern zur Bildverteilung auf zwei Vollfarb-Bildsensoren, zwei bzw. drei mechanischen Verschlüssen und einem optischen Sucher bzw. dritten Bildsensor.

Die Figuren werden übergreifend beschrieben, wobei gleiche Bezugsziffern gleiche Einheiten kennzeichnen.

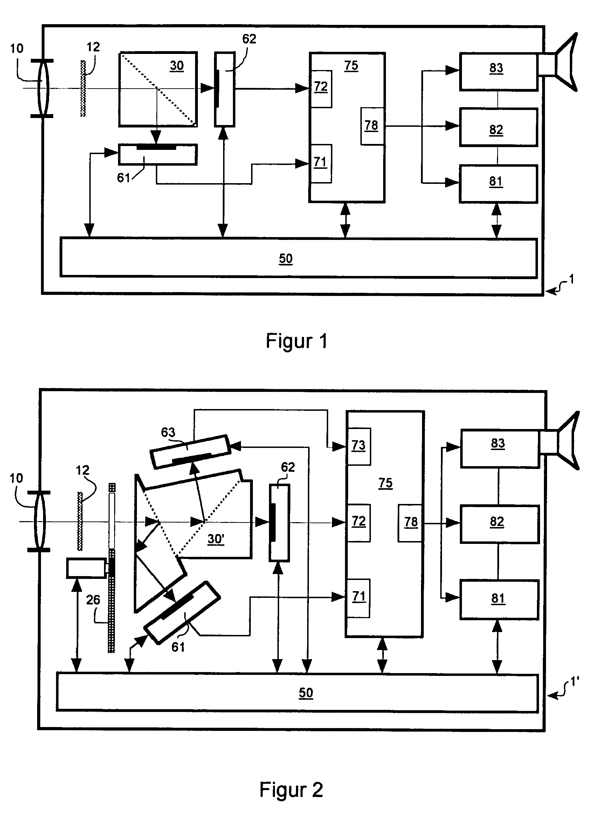

In Figur 1 ist ein Ausführungsbeispiel einer erfindungsgemäßen Kamera mit 1 bezeichnet. Die Kamera weist ein Objektiv 10 auf, das ein erfasstes Bild über Filter 12 auf ein Prisma 30 projiziert. Durch das Prisma 30 wird das erfasste Bild farbneutral auf zwei Bildsensoren 61 und 62 aufgeteilt. Die Bildsensoren 61 und 62 sind als Vollfarb-Bildsensoren ausgebildet, wodurch von beiden Bildsensoren 61 und 62 je ein Vollfarb-Zwischenbild 71 bzw. 72 erzeugt wird.

Die Zwischenbilder 71 und 72 werden einer Bildverarbeitung 75 zugeführt, die daraus ein Ergebnisbild 78 erzeugt. Das Ergebnisbild 78 wiederum wird weiteren Einrichtungen der Kamera zugeführt, bei dem dargestellten Ausführungsbeispiel einer Speichereinrichtung 81, einer Einrichtung zur Monitoranzeige 82 und einer Suchereinrichtung 83. Die Digitalkamera 1 weist weiterhin eine Kamerasteuerungseinrichtung 50 auf, die zur Steuerung der Bildsensoren 61 und 62, der Bildverarbeitungseinrichtung 75 und der weiteren Einrichtungen 81 bis 83 vorgesehen ist.

In Figur 2 ist ein anderes Ausführungsbeispiel einer erfindungsgemäßen Digitalkamera insgesamt mit 1' bezeichnet. Bei der Digitalkamera 1' ist im Vergleich zur Digitalkamera 1 ein Strahlenteilerprisma 30' mit drei Bildausgängen vorgesehen. Bei der Digitalkamera 1' wird das erfasste Bild über das Strahlenteilerprisma 30' auf die Bildsensoren 61, 62 und 63 projiziert. In der Ausführungsform gemäß Figur 2 sind drei Vollfarb-Bildsensoren 61, 62, 63 vorgesehen. Es versteht sich, dass ebenso ein Vollfarbsensor und zwei Teilfarb-Sensoren vorgesehen sein können. Von den drei Vollfarb-Bildsensoren 61, 62 und 63 werden jeweils ein Zwischenbild 71, 72 bzw. 73 erzeugt und der Bildverarbeitungseinrichtung 75 zugeführt. Die Bildverarbeitungseinrichtung 75 erzeugt aus den drei Zwischenbildern 71, 72 und 73 das Ergebnisbild 78 und stellt es den benannten Einrichtungen zur Verfügung.

Weiterhin ist ein rotierender Verschluss 26 vorgesehen, der als lichtundurchlässiges rotierendes Rad mit einem lichtdurchlässigen Sektor ausgebildet ist. Es ist vorteilhaft, wenn der rotierende Verschluss 26 mit einer Blende versehen ist, so dass die Öffnungsgröße des lichtdurchlässigen Sektors variabel eingestellt werden kann. Es bietet sich z. B. an, die Blende als weiteres Rad mit einer Öffnung auf dem Rad 26 vorzusehen, um durch gegenseitiges Verdrehen eine Einstellung des Öffnungswinkels zu ermöglichen. Dies kann elektrisch oder manuell geschehen.

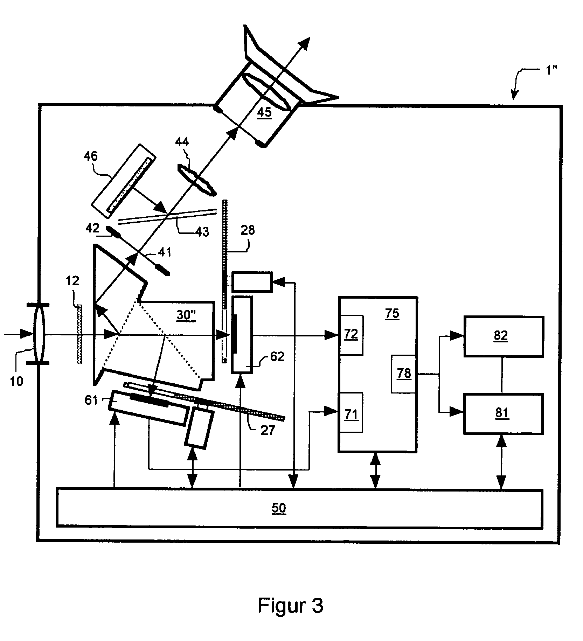

In Figur 3 ist eine bevorzugte Ausführungsform der erfindungsgemäßen Digitalkamera insgesamt mit 1" bezeichnet. Die Digitalkamera 1" weist ein Strahlenteilerprisma 30" mit drei Bildausgängen auf. Das vom Objektiv 10 erfasste Bild wird über das Prisma 30" auf die Bildsensoren 61 und 62 projiziert. Den Bildsensoren 61 und 62 sind rotierende optische Verschlüsse 27 bzw. 28 zugeordnet. Diese können wiederum als rotierende lichtundurchlässige Räder mit lichtdurchlässigen Sektoren und Blende ausgebildet sein. Weiterhin projiziert das Prisma 30" das erfasste Bild auf eine Mattscheibe oder Mikroprismenscheibe 41, die mit einem Rahmen 42 zur Kennzeichnung des von der Kamera auszugebenden bzw. abzuspeichernden Bildes und zur äußeren Begrenzung des im Sucher betrachtbaren Bildes ausgestattet ist.

Das auf die Mattscheibe 41 projizierte Bild wird über einen halbdurchlässigen Spiegel 43 und weitere optische Elemente 44 in einem Okular 45 betrachtet. Weiterhin ist eine Anzeige bzw. ein Display 46 vorsehbar, das über den halbdurchlässigen Spiegel 43 Informationen, die ebenfalls im Sucher 45 sichtbar sind, an den Betrachter übermittelt.

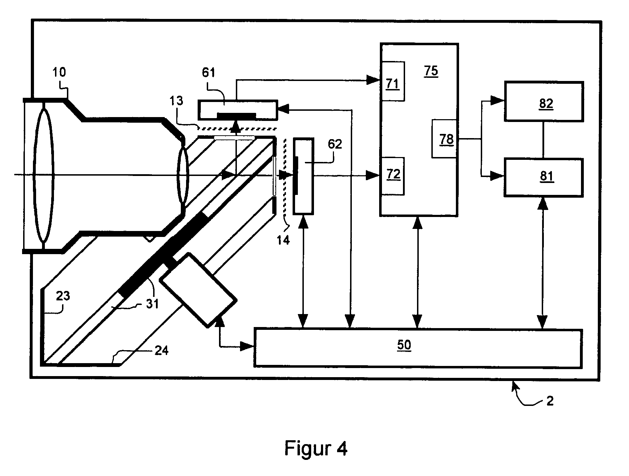

In Figur 4 ist eine Ausführungsform der erfindungsgemäßen Digitalkamera insgesamt mit 2 bezeichnet. Bei dieser Digitalkamera 2 wird das vom Objektiv 10 erfasste Bild über ein rotierendes Spiegelrad 31 auf die Bildsensoren 61 und 62 projiziert. Den Vollfarb-Bildsensoren 61 und 62 sind Filter 13 bzw. 14 zugeordnet. Diese Filter können als Polarisationsfilter, Helligkeitsfilter, usw. ausgebildet sein. Das Spiegelrad 31 ist mit reflektierenden und durchlässigen Bereichen ausgebildet, so dass das erfasste Bild abwechselnd auf den Bildsensor 61 bzw. 62 projiziert wird. Weiterhin weist das Spiegelrad 31 kegelförmige Verschlüsse 23 und 24 mit in ihrem Winkel vorzugsweise verstellbaren Sektorblenden auf.

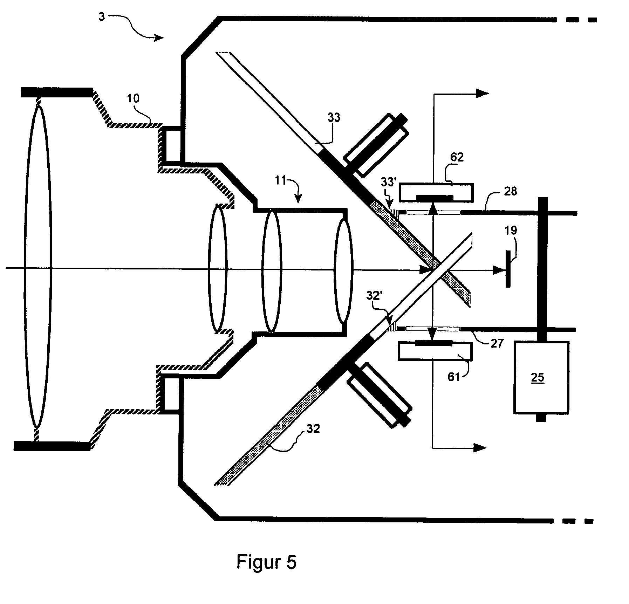

In Figur 5 ist ein vorderer Teil einer Ausführungsform der erfindungsgemäßen Digitalkamera insgesamt mit 3 bezeichnet. Bei der Digitalkamera 3 wird das vom Objektiv 10 erfasste Bild über eine Zwischenoptik 11 auf zwei ineinandergreifende, verzahnte Spiegelräder 32 und 33 projiziert. Die Spiegelräder 32 und 33 projizieren das erfasste Bild abwechselnd auf die Bildsensoren 61 und 62. Die Bildsensoren 61 und 62 sind mit rotierenden Verschlüssen 27 bzw. 28 versehen, die von einem Motor 25 angetrieben werden. Es kann vorgesehen sein, die Spiegelräder 32 und 33 über eine umlaufende Verzahnung 32' und 33' ebenfalls durch die Verschlüsse 27 und 28 bzw. deren Motor 25 anzutreiben. Ebenso kann es vorgesehen sein, die Spiegelräder 32 und 33 durch einen eigenen Motor bzw. eigene Motoren anzutreiben.

Durch die Verzahnungslücken der Spiegelräder 32 und 33 wird ein erfasstes Bild weiterhin auf ein optisches Bauteil 19 projiziert. Dieses optische Bauteil 19 kann alternativ als dritter Bildsensor, als optische Suchereinrichtung, usw. ausgebildet sein.

In den folgenden Abschnitten wird nun beschrieben, wie mittels der Ausführungsformen der erfindungsgemäßen Kamera gemäß Figur 1 bis Figur 5 bzw. mittels des erfindungsgemäßen Verfahrens Ergebnisbilder mit hohem Kontrastumfang und/oder hoher Schärfe erzeugt werden können.

Zur Erfassung eines hohen Kontrastumfangs eines aufzuzeichnenden Bildausschnitts bei Kameras mit einem optionalen optischen Sucher und einer Bildverteilung über Prismen oder rotierende Spiegelflächen wird z.B. folgende Implementierung der Erfindung entsprechend Figur 3 und 5 vorgeschlagen.

Es werden zwei Farbbilder aufgenommen, wobei der Bildsensor 61 vor allem dunkle Bildbereiche und der Bildsensor 62 vor allem helle Bildbereiche optimal aufnimmt. Hierzu ist der Bildsensor 61 elektronisch auf eine 4-fache Vorverstärkung zur bevorzugten Aufnahme dunkler Bildbereiche eingestellt. Der Bildsensor 62 erhält über optische Elemente ein 4-fach dunkleres Bild als der für dunkle Bereiche vorgesehene Sensor 61, so dass Sensor 62 vor allem helle Bildbereiche optimal aufnimmt. Dies kann optisch vorzugsweise dadurch bewirkt werden, dass bei der Kamera 1" mit Strahlenteiler-Prisma 30" die Spiegelflächen im Prisma das Licht des zu verteilenden Bildes in dem gewünschten Intensitätsverhältnis auf die einzelnen Bildsensoren verteilen oder bei der Kamera 2 mit rotierendem Spiegelrad 31 die verspiegelten Sektoren des Spiegelrades eine andere Winkelbreite als die der benachbarten Durchbrüche/Lücken haben oder die verspiegelten Zähne der rotierenden Zahnräder 32 und 33 bei Kamera 3 unterschiedliche Zahnbreiten aufweisen. Zusätzlich kann vor dem Sensor 62 noch ein als Neutraldichtefilter ausgebildeter Filter 14 angebracht sein.

Der Bildsensor 61 erzeugt das (dunkle) Zwischenbild 71, der Bildsensor 62 das (helle) Zwischenbild 72. Die Bildverarbeitung 75 setzt nun die digitalen Daten beider Zwischenbilder 71 und 72 zu dem Ergebnisbild 78 zusammen. Dieses Ergebnisbild umfasst dann einen Helligkeits-Wertebereich von 32 - 65520 bzw. 2 - 4096, d.h. es kann einen Kontrastbereich von ca 1:2000 in guter Qualität darstellen, wenn ein einzelner Sensor einen ausnutzbaren Kontrastumfang von 1:128 bei guter Bildqualität bietet (1/128 x 4 x 4).

Zur Erfassung eines extrem hohen Kontrastumfangs eines aufzuzeichnenden Bildausschnitts kann Digitalkamera 1' oder Digitalkamera 3 verwendet werden, wenn bei Digitalkamera 3 das optische Bauteil 19 als dritter Bildsensor ausgebildet ist.

Zur Bildverteilung auf drei Vollfarb-Bildsensoren 61, 62 und 63 sind das farbneutral verteilende Prisma 30' mit zwei inneren Spiegelflächen und drei Bildausgängen bzw. die zwei Spiegelzahnräder 32, 33 vorgesehen. Jeder der drei Bildsensoren 61, 62 und 63 wird für die Aufnahme eines jeweils anderen Helligkeitsbereichs optimiert. Dies erfolgt vorzugsweise vor allem mittels entsprechender Vorgabe der Transparenz der inneren Spiegelflächen des Prismas 30' bzw. mittels entsprechender Vorgabe der Spiegelzahnbreiten und Lückenbreiten und optional zusätzlich mittels Neutraldichtefiltern und/oder elektronischer Vorverstärkung.

Auf diese Weise erhält der Bildsensor 63 eine 4-fach geringere Lichtintensität als der Sensor 62 und dieser wiederum eine 4-fache geringere Lichtintensität als der Sensor 61. Zusätzlich kann für die Sensoren 61 bis 63 eine elektronische Vorverstärkung von Faktor 4, 2 oder 1 eingestellt werden. Sind von jedem Sensor z.B. die Helligkeitswerte 32 - 4095 verwendbar, so kann dann Sensor 61 den relativen Helligkeitsbereich von 32 - 4095, Sensor 62 den Bereich 256 - 32760 und Sensor 63 den Bereich 2048 - 262080 in guter Qualität erfassen.

Mittels Bildverarbeitung 75 wird aus den drei Vollfarb-Zwischenbildern 71, 72 und 73 der Sensoren 61, 62 und 63 ein Ergebnisbild 78 erzeugt, welches dann einen relativen Helligkeits-Wertebereich von 32-262080 umfasst, d.h. es kann einen Kontrastbereich von ca. 1:8000 in guter Qualität darstellen, welcher dann bereits den Kontrastumfang der meisten chemischen Filme übertrifft.

Die Ermittlung des Ergebnisbildes 78 durch die Bildverarbeitung 75 kann für zwei oder drei Bildsensoren z.B. nach der folgenden Weise durchgeführt werden:

Für jeden einzelnen Bildpunkt des Ergebnisbildes werden die Helligkeitswerte der diesem Bildpunktort entsprechenden Bildpunkte der Sensoren rechnerisch überlagert. Zuerst werden alle von Sensor 62 bzw. 63 gelieferten Zahlenwerte mit demjenigen Faktor multipliziert, um den seine Lichtempfindlichkeit reduziert wurde.

Für das vorhergehende Beispiel mit drei Sensoren ist das der Faktor 8 für den Sensor 62 und der Faktor 64 für den Sensor 63, so dass Sensor 61 zu einem verwertbaren Zahlenbereich von 32 - 4095, Sensor 62 von 256 - 32760 und Sensor 63 von 2048 - 262080 führt, welche dann weiterverarbeitet werden.

Es bietet sich an, folgende Verfahrensweise anzuwenden. Für Helligkeits-Zahlenwerte, welche nur aus den Werten eines Bildsensors abgeleitet werden können, werden für das Ergebnisbild 78 nur dessen Werte verwendet. Dies sind die Werte 32 bis 255 von Sensor 61 und die Werte 32768 bis 262080 von Sensor 63. In den Zahlenbereichen, wo zwei oder drei Sensoren gleiche Werte ergeben können, wird der Ergebnisbildwert vorzugsweise mittels Mittelwertbildung berechnet. Diese erfolgt vorzugsweise gewichtet, so dass für Werte ab 256 vor allem die Werte von Sensor 61 zum Ergebniswert beitragen und erst ab z.B. 3000 vor allem die Werte von Sensor 62 und erst ab z.B. 20000 vor allem die Werte von Sensor 63. Auf diese Weise werden Helligkeits- und Farbsprünge vermieden, falls sich z.B. für eine bestimmte Helligkeit aufgrund variierender Bildsensoreigenschaften, Filtereigenschaften, Bildverteilereigenschaften etc. unterschiedliche Werte ergeben.

Um weitestgehend solche Variationen von Helligkeitswerten und auch Farbcharakteristiken zwischen den Bildsensordaten bei Bildpunkten im gemeinsamen Helligkeitsbereich zu vermeiden, wird vorgeschlagen, möglichst in allen Aspekten identische Bildsensoren zu verwenden und zusätzlich herstellerseitig und/oder bei jedem Weißabgleich die verbleibenden, von den Bildsensoren, Filtern, Bildverteilern, etc. verursachten Differenzen zu ermitteln und als Korrekturfaktoren zu speichern. Die Bildverarbeitung 75 kann dann bei der Bearbeitung der Bildsensordaten diese Korrekturfaktoren berücksichtigen, so dass sie ein Ergebnisbild 78 ermitteln kann, welches keinerlei Helligkeitssprünge oder Farbcharakteristik-Variation aufweist.

Bei Kameras mit zwei oder drei Bildsensoren und einer oder zwei rotierenden Spiegelflächen, bei welchen ein Bild je Bildratendauer nacheinander oder auch mehrfach abwechselnd auf die beiden Sensoren verteilt wird, kann optional für sich bewegende Bildobjekte zusätzlich ein weiteres Verfahren verwendet werden. Ein sich bewegendes Objekt kann daran erkannt werden, dass die von den zwei bis drei Sensoren ermittelten Helligkeitswerte bei ein und demselben Bildpunkt stärker voneinander abweichen (da die Bilder zu unterschiedlichen Zeiten auf die Sensoren projiziert werden).

Durch ein geeignetes Verfahren kann dann eine bessere Darstellung der Bewegungsunschärfe erzielt werden, welche aufgrund der aufeinanderfolgenden Belichtung der beiden Sensoren sonst nicht stufenlos darstellbar ist.

Der oben beschriebene erfindungsgemäße Vorschlag, einen möglichst hohen Kontrastumfang des aufzuzeichnenden Bildes zu erfassen, kann auch für im Halbbildverfahren des herkömmlichen Fernsehens aufzunehmende Bilder angewandt werden, indem die Erfindung jeweils entweder auf ein Halbbild mit geradzahligen Bildzeilen oder eines mit ungeradzahligen Bildzeilen angewendet wird.

Nach Ermittlung des Ergebnisbildes 78 kann dieses noch mittels weiterer Bildverarbeitung umgewandelt werden (z.B. Zahlenwertnormierung, Farbkonvertierung, Datenkompression, Bildformat-Anpassung, Umwandlung in logarithmische Zahlendarstellung, etc.) und an die weitere(n) Funktionseinheit(en) 81, 82, etc. der Kamera zur Speicherung, Monitor-Darstellung, Anzeige durch einen elektronischen Sucher, etc. geleitet werden.

Auf oben beschriebene Weise können mittels dieser Erfindung erstmalig auch digitale Filmkameras trotz der Nachteile ihrer optoelektronischen Sensoren einen Kontrastumfang aufzeichnen, welcher dem Kontrastumfang von chemischem Film nahe kommt oder diesen sogar übertrifft.

Zusätzlich wird eine gleichmäßigere Farbcharakteristik aller Helligkeitsbereiche über den gesamten hohen aufnehmbaren Kontrastumfang erzielt, als dies dem chemischen Film in der Regel möglich ist, da die Lichtempfindlichkeit seiner Farbschichten, im Gegensatz zu optoelektronischen Sensoren, in der Regel nicht in allen Helligkeitsbereichen im exakt gleichen Verhältnis zueinander bleiben.

Im folgenden werden nun bevorzugte Implemetierungsbeispiele für einen optischen Sucher erläutert.

Die Erfindung ermöglicht auch unter Beibehaltung ihrer Vorteile zur Erhöhung des aufzeichenbaren Konrastumfangs die Implemetierung eines optischen Suchers für digitale Filmkameras mit zwei Vollfarb-Bildsensoren, welche Objektive verwenden, die für Kameras mit einem Strahlenteiler-Prisma vorgesehen sind.

In Figur 3 ist ein Prisma 30" mit 2 farbneutralen semitransparenten Spiegelebenen dargestellt, das das vom Objektiv projizierte Abbild zum einen wie oben beschrieben auf zwei Bildsensoren 61 und 62 und zum anderen auf eine optische Suchereinrichtung 41 bis 46 verteilt. Das Bild für den Sucher wird vom Objektiv über das Prisma 30" z.B. auf einer üblichen Mattscheibe bzw. Mikroprismenscheibe 41 oder auch als virtuelles Bild an gleicher Stelle abgebildet. Hier oder an anderer geeigneter Stelle können vorzugsweise außerdem auf übliche Weise Rahmen 42 zur Kennzeichnung des von der Kamera auszugebenden bzw. abzuspeichernden Bildes und zur äußeren Begrenzung des betrachtbaren Bildes vorgesehen sein.

Das Bild ist über die optische Suchereinrichtung 41 bis 46 vom Anwender betrachtbar. Derartige Suchereinrichtungen können z.B. weitere optische Elemente 44 zur Vergrößerung und Bildaufrichtung etc., Okulare 45 aufweisen. Weiterhin kann z.B. ein elektronisches Display 46 über einen Strahlenteiler 43 einen dem jeweils gewünschten Aufnahme-Bildformat entsprechenden Bildausschnitts-Rahmen anzeigen und, vorzugsweise außerhalb des von 42 begrenzten Sucherbildes, zusätzliche Status-Informationen, wie verwendete Bildrate, Belichtungsdauer, Helligkeitsverteilung, etc. anzeigen.

Die Helligkeit des Sucherbildes kann wie oben beschrieben durch entsprechende Wahl der Transparenzen der zugehörigen inneren Spiegelfläche des Prismas 30" mit z.B. 50% auf die üblichen 50% der vom Objektiv gelieferten Helligkeit der auf chemischem Film aufzeichnenden Bewegtbildkameras mit optischem Sucher vorgegeben werden. Vorzugsweise ist für jeden der Bildsensoren 61, 62 ein eigener rotierender Sektorverschluss 27, 28 vorgesehen, damit der Sucher niemals von einem rotierenden Verschluss abgedunkelt wird und ständig Licht erhält und so auch bei ausgeschalteter Bewegtbildkamera verwendet werden kann.

Eine Implementierung eines optischen Suchers für digitale Filmkameras mit zwei jeweils alle Farben registrierende Bildsensoren, welche herkömmliche Objektive verwenden, die für Kameras mit rotierenden Strahlenteiler-Spiegelfächen vorgesehen sind, ist in Figur 5 dargestellt.

Es sind zwei synchron rotierende Zahnräder 32, 33 vorgesehen, welche zueinander in einem Winkel von z.B. 90° rotieren und deren Zähne berührungslos ineinander greifen, wobei zumindest einige der Zähne jeweils verspiegelt sind. Die verspiegelten Zähne des Rades 33 leiten dann das Abbild des Objektivs 10 auf den Sensor 61 und die des Rades 32 auf den Sensor 62.

Durch die für das berührungslose Ineinandergreifen der Zähne vorgesehenen Zwischenräume erscheint ein drittes Abbild auf dem optischen Bauteil 19, welches als Bestandteil eines optischen Suchers oder als ein dritter Bildsensor ausgebildet sein kann. Die relative Helligkeit dieses Abbildes ist z.B. über entsprechende Wahl der Breite dieser Lücken im Verhältnis zur Breite der Zähne vorgebbar. Um die Lichtstärke eines optischen Suchers zu erhöhen, der als optisches Bauteil 19 vorgesehen sein kann, können in dem Winkelbereich, für den beide Sensoren 61 und 62 von den mechanischen Verschlüssen 27 und 28, deren Funktionsweise weiter unten näher beschrieben wird, abgedunkelt sind, die Zähne beider Räder 32, 33 entfernt sein. Dies hat den zusätzlichen Vorteil, dass der Sucher auf besonders einfache Weise auch bei ausgeschalteter Kamera ein ständiges und besonders helles Sucherbild liefert, indem die beiden Räder 32, 33 in eine Position gebracht werden, in welcher sich keine Zähne im Strahlengang des optischen Bauteils 19 befinden. Dies kann auch automatisch jeweils beim Ausschalten der Kamera erfolgen, wobei dann vorzugsweise die entsprechenden Radpositionen automatisch auf mechanische Weise arretiert werden.

Auf oben beschriebene Weise kann die Erfindung erstmalig auch für Kameras mit rotierenden Strahlenteiler-Spiegelfächen einen optischen Sucher zur Verfügung stellen, welcher dann alle Vorteile optischer Sucher von chemisch aufzeichnenden Kameras aufweisen kann, ohne auf die vorteilhafte Anwendung von zwei Vollfarb-Bildsensoren verzichten zu müssen.

Zur weiteren Verbesserung optischer Sucher wird vorgeschlagen, diese gemäß Figur 3 mit einer elektronischen Displayanzeige 46 zu kombinieren, wie sie bei elektronischen Suchern verwendet werden. Dies kann z.B. durch optische Überlagerung beider Bilder mittels optischem Strahlenteiler 43 erfolgen. Für Displays, welche kein tiefes Schwarz darstellen können, wird vorgeschlagen, deren Zentrum in einem Bereich optisch abzudecken (zu verdunkeln), welcher z.B. dem kleinsten aufzuzeichnenden Bildformat entspricht, damit das Display nicht den hohen darstellbaren Kontrastumfang des optischen Suchers im wichtigsten Bildbereich mindert.

Das Display 46 kann dann z.B. einen Bildrahmen darstellen, welcher den aufzuzeichnenden Bildausschnitt entsprechend dem gewählten Bildformat kennzeichnet. Bei Kameras, welche verschiedene Bildformate aufzeichnen können, wird dann durch diesen variablen Rahmen auf einfache Weise der jeweilige aufzuzeichnende Bildausschnitt gekennzeichnet, ohne dass mechanisch eine Bildmaske getauscht werden muss. Außerdem ist es vorteilhaft, vom Display 46 anzuzeigende Informationen, wie , z.B. die üblichen Statusinformation, wie Bildrate, Belichtungszeit, etc., nur außerhalb des ganzen vom optischen Sucher angezeigten Bildausschnitts darzustellen.

Weiterhin wird zur genaueren Beurteilung der Belichtung einer Szene vorgeschlagen, die Vorteile digitaler Kameras mit optoelektronischen Bildsensoren zu nutzen und die Helligkeitsverteilung des von der Bildverarbeitung 75 ermittelten Ergebnisbildes 78 z.B. in Form eines grafischen Histogramms anzuzeigen. Anhand dieses Histogramms kann z.B. sofort erkannt werden, ob und wieviel Prozent eines aufzunehmenden Bildausschnitts aufgrund zu geringer oder zu hoher Helligkeit von der Kamera bei der momentanen Einstellung von Blende, Belichtungszeit, etc. nicht mehr aufgezeichnet werden können. Gleichzeitig kann erkannt werden, wieviele Prozent des Bildausschnitts in einem jeweiligen Helligkeitsbereich liegen. Diese Auswertung kann auf Tastendruck z.B. auch auf das Bildzentrum beschränkt werden, so dass die Kamera zur Belichtungsanalyse bestimmter Objekte im Bildausschnitt verwendet werden kann.

Die hierzu erforderlichen Techniken und Verfahren werden von Fotoapparaten, Videokameras, in der Bildverarbeitung mittels Computer und in der Computertechnik allgemein bereits seit Jahrzehnten verwendet.

Im weiteren werden nun Ausführungsbeispiele mit rotierenden Verschlüssen näher erläutert.

Optoelektronische Bildsensoren mit einem elektronischen Roll-Verschluss benötigen keinen mechanischen Verschluss mehr. Jedoch erfolgt dabei die Belichtung bildzeilenweise nacheinander, so dass die Belichtung der letzten Bildzeile, auch bei kurzen Belichtungszeiten, gegenüber der ersten stets bis zu einer Bildratendauer später erfolgt. Alle sich bewegenden Objekte werden daher geometrisch verzerrt aufgenommen.

Daher müssen für eine unverzerrte Bewegungsunschärfe auch bei den optoelektronischen Bildsensoren mechanische Belichtungsverschlüsse vorgesehen werden, so dass, wie bei herkömmlichen Filmkameras, z.B. während der halben Bildratendauer alle Bildpunkte praktisch gleichzeitig belichtet werden. Sollten einmal bewegungslose elektro-optische Verschlüsse verfügbar sein, welche schnell genug und transparent genug sind bzw. ausreichend abdunkeln können, sollten diese natürlich anstelle der mechanischen Verschlüsse verwendet werden.

Anhand der Figuren 2 und 3 wird nun eine Ausführungsform einer erfindungsgemäßen Digitalkamera mit einem Prismen-Bildverteiler 30' bzw. 30" und einem rotierenden Verschluss 26 bzw. 27 und 28 erläutert.

Bei der Kamera 1' ist ein mit einem lichtdurchlassenden Sektor versehenes rotierendes Rad 26, dessen Sektorwinkel vorzugsweise zur Veränderung der Belichtungszeit manuell oder elektronisch verstellbar ist, vor dem Prisma 30' vorgesehen. Bei der Kamera 1" sind zwei entsprechende Räder 27 und 28 vor den Bildsensoren 61 und 62 vorgesehen. Es kann empfehlenswert sein, statt einem zwei gleiche sich gegenüberliegende Hellsektoren vorzusehen, um mechanische Unwuchtprobleme zu minimieren.

Die Kamerasteuerung 50 steuert das Rad 26 bzw. die Räder 27 und 28 so, dass die Frequenz, mit der ein oder mehrere Offensektoren das Licht zum Prisma 30' bzw. zum Bildsensor 61 oder 62 durchlassen, stets der gewünschten Bildrate, z.B. 24 mal je Sekunde, entspricht. Weiterhin werden die Bildsensoren 61 bis 63 so gesteuert, dass diese jeweils während einer Dunkelphase die Bilddaten des zuvor belichteten Bildausschnitts auslesen und an die Bildverarbeitung 75 übergeben. Die Dunkelphase sollte mindestens so lange andauern, bis alle Daten ausgelesen sind. Erst im Anschluss an das Auslesen sollte der Hellsektor Licht für die Belichtung des nächsten Bildes auf das Prisma durchlassen.

Es versteht sich, dass bei der Kamera 1" ein Verschluss 26 vor dem Prisma 30" statt der zwei Verschlüsse 27 und 28 vorgesehen sein kann. Um in diesem Fall die optische Suchereinrichtung 41 bis 45 auch dann verwenden zu können, wenn die Kamera ausgeschaltet ist, sollte die Steuerung 50 während des Ausschaltens den Offensektor des Rades 26 vor das Prisma 30" steuern und dort mechanisch arretieren.

Eine bevorzugte Implementierung einer digitalen Filmkamera mit einem rotierenden Bildverteiler-Verschlusses mit zwei Vollfarb-Bildsensoren und elektronischem Sucher, welche Objektive für Kameras ohne Strahlenteiler-Prisma verwenden kann, wird nun anhand Figur 4 erläutert.

Es ist ein rotierendes Rad 31 vorgesehen, welches abwechselnd verspiegelte Sektoren und sektorförmige Durchbrüche vorzugsweise gleicher Anzahl aufweist, wobei die Trennlinien zwischen Spiegelflächen und Durchbrüchen stets auf einer Linie durch das Rotationszentrum liegen sollten. Vorzugsweise liegen die optische Achse des Objektivs 10, die Rotationsachse des Rades 31 und die durch das Zentrum der Bildsensoren gehenden Zenitachsen in einer Ebene, wobei die Rotationsachse um 45° zur optischen Achse geneigt ist. Auf beiden Seiten des Rades befindet sich, vorzugsweise mit diesem fest verbunden, jeweils eine kegelförmige Blende 23 bzw. 24, welche die Bildsensoren 61, 62 entweder abdunkelt oder durch zumindest eine sektorförmige Öffnung im Kegel belichtet. Der die Belichtungszeit bestimmende Winkel dieser Öffnung ist vorzugsweise mechanisch oder elektronisch verstellbar.

Über die rotierenden Spiegelsegmente und Durchbrüche werden die Bildsensoren 61 und 62 abwechselnd belichtet, solange die kegelförmigen Blenden 23, 24 die Bildsensoren nicht abdunkeln. Die Breite der Spiegelsektoren und Durchbrüche wird vorzugsweise so gewählt, dass für die gängige Belichtungszeit von 50% der Bildratendauer, d.h. bei gleichen Winkeln für Abdunkelsektor und Offensektor der Kegelblenden, das vom Objektiv 10 projizierte Bild von mehreren Spiegelsektoren und Durchbruchsektoren mehrfach auf den Bildsensoren 61 und 62 abgebildet wird. Auf diese Weise wird erreicht, dass Beginn und Ende der Belichtungszeit für beide Bildsensoren fast gleichzeitig erfolgen und dass die Belichtung aller Bildpunkte eines Sensors während dieser Zeit mehrfach und möglichst oft erfolgt, so dass eine gute Bewegungsunschärfe erzielt wird.

Um die Zahl der Mehrfachbelichtungen weiter zu erhöhen, beginnt ein Offensektor der Kegelblende vorzugsweise in der Mitte eines Spiegelsektors. Für kürzere Belichtungszeiten wird der Offensektor der Kegelblenden vorzugsweise exakt stufenweise um jeweils die Summe der Winkelbreite eines Spiegelsektors und eines Durchbruchs verringert, so dass das Verhältnis der auf die Bildsensoren verteilten Lichtmengen stets gleich bleibt. Sollen beliebige Belichtungszeiten möglich sein, muss der exakte Winkel des Offensektors bekannt sein, um das Lichtmengenverhältnis exakt ermitteln zu können.

Wie weiter oben bereits angeführt, erhält Bildsensor 62 vorzugsweise auf optische Weise weniger Licht als Bildsensor 61. Hierzu wird die Sektorbreite eines Durchbruchs entsprechend kleiner als die des benachbarten Spiegelsektors ausgelegt. Eine Sektorbreite sollte jedoch höchstens so klein sein, dass die Bildschärfe noch nicht durch Lichtbeugungseffekte verringert wird.

Statt Durchbrüchen können auch bis zum Rand des Rades 31 reichende Aussparungen vorhanden sein, wobei Durchbrüche jedoch den Vorteil einer größeren Stabilität des Rades 31 und damit einer besseren Spiegelebenheit bewirken.

Anstelle der mit dem Rad 31 verbundenen Kegelblenden 23, 24 können auch direkt vor den Bildsensoren 61, 62 rotierende flache Sektorverschlüsse vorgesehen werden, wie sie bereits weiter oben für Kameras mit Strahlenteilerprisma beschrieben wurden. Es sollte dann beachtet werden, dass diese Verschlüsse möglichst exakt synchron zum Rad 31 rotieren.

Eine Ausgestaltung der erfindungsgemäßen Kamera mit einem rotierenden Bildverteiler-Verschluss, mit zwei Vollfarb-Bildsensoren und optional einem optischen Sucher bzw. einem dritten Bildsensor, welche Objektive für Kameras ohne Strahlenteiler-Prisma verwenden, wird nun anhand Figur 5 beschrieben.

Es werden zwei synchron rotierende Zahnräder 32 und 33 mit sektorförmigen, verspiegelten Zähnen vorgesehen, welche zueinander in einem Winkel von z.B. 90° rotieren und deren Zähne berührungslos ineinander greifen. Das Verhältnis der Zahn-Sektorbreiten von Rad 32 zu Rad 33 und zu den sektorförmigen Lücken zwischen den Zähnen bestimmt, in welchem durchschnittlichen Intensitätsverhältnis das vom Objektiv 10 projizierte Abbild auf die beiden Sensoren 61 und 62 und das hinter den Lücken der Räder angeordnete optische Bauteil 19 (z.B. optischer Sucher oder dritter Bildsensor) verteilt wird.

Vorzugsweise sind die Zahnsegmente von Rad 32 schmäler als die des Rades 33 ausgebildet, damit Sensor 62 bevorzugt helle Bildbereiche optimal wiedergibt. Zusätzlich kann vor Sensor 62 noch ein Neutralfilter plaziert werden.

Als Sektorverschluss kann ähnlich wie in Fig. 4 auf der Rückseite von Rad 33, welches den unteren Sensor 61 belichtet, wieder ein Verschlussrad 24 mit variablem Öffnungssektor angebracht sein, dessen kegelförmiger Rand unterhalb vom oberen Sensor 62 rotiert und das Licht auf diesen freigibt oder blockiert. Entsprechendes gilt für Rad 32. Im Falle eines dritten Bildsensors ist vor diesem noch ein weiterer rotierender Sektorverschluss, z.B. entsprechend Fig. 1, erforderlich.

In der folgenden Beschreibung entsprechend Fig. 5 wird für eine Variante mit optischem Sucher eine weitere Implementation vorgestellt, welche den zusätzlichen Vorteil eines einfachen Antriebs mit sich bringt.

Es sind zwei miteinander verbundene, rotierende Sektorverschlussräder 27, 28 mit vorzugsweise elektronisch variablem Offensektorwinkel vor den Bildsensoren 61 bzw. 62 angeordnet. Sie werden von Motor 25 angetrieben und treiben ihrerseits über eine umlaufende Verzahnung die beiden Spiegelzahnräder 32, 33 an, wobei diese über die starre Verbindung der Sektorverschlüsse untereinander gleichzeitig synchronisiert werden, so dass sich ihre verspiegelten Zähne nicht berühren.

Das optische Bauteil 19 kann entsprechend z.B. Fig. 3 als optische Umlenkung für einen optischen Sucher oder als dritter Bildsensor ausgebildet sein. Alle weiteren Funktionen und Details, insbesondere zur Bilderzeugung, entsprechen den bisherigen Erläuterungen. Die weiteren Bauteile 75, 50, 81, 82, 83 usw. sind daher nur angedeutet oder aus Gründen der Übersichtlichkeit weggelassen.

Die Digitalkamera 3 weist weiterhin eine Zwischenoptik 11 auf, die im folgenden beschrieben werden soll.

Es ist vorteilhaft, für die Digitalkamera 2 oder 3 herkömmlich erhältliche Objektive für 16 mm oder 35 mm zu verwenden. Diese Objektive weisen, anders als die für Prismen-Bildverteiler konstruierten Objektive, einen relativ geringen Abstand zwischen ihrer Rückseite und dem von ihnen projizierten Abbild auf. Bei Verwendung von rotierenden, verspiegelten Rädern 31 bzw. 32 und 33 als Bildverteiler reicht der Platz vor diesen Rädern für diese Objektive evtl. nicht aus, da die Spiegelräder möglichst stabil und damit dick sein sollen, um eine hohe optische Qualität der Spiegelflächen zu erzielen, und da zumindest ein Bildsensor, anders als das Filmfenster, waagerecht angeordnet ist (61 aus Figur 4; 61 und 62 aus Figur 5). Zusätzlich benötigen die zwei Verschluss-Sektorblenden 23, 24 bzw. 27, 28 Platz.

Es wird daher vorgeschlagen, vor das Bildverteilrad 31 bzw. die Räder 32, 33 eine Zwischenoptik 11 vorzusehen. Diese ist vorzugsweise vom Retrofokustyp, so dass der Abstand zwischen dieser Optik und dem von ihr projizierten Abbild ausreichend groß wird.
Wird kein optischer Sucher vorgesehen, so kann dann vor den rotierenden Spiegelrädern ein einziger zentraler rotierender Sektorverschluss angebracht werden, so dass dann die Spiegelräder nur als Bildverteiler auf die 2-3 Bildsensoren dienen und die weiteren 2-3 rotierenden Sektorverschlüsse nicht mehr benötigt werden.

Weiterhin kann diese Zwischenoptik so konstruiert sein, dass sie das Einfügen von Filtern, wie z.B. eines ND-Filterrades in den Strahlengang erlaubt, ohne dass dies die Bildqualität beeinflusst.

Weiterhin wird vorgeschlagen, dass diese Zwischenoptik 11 das vom Objektiv 10 erzeugte Abbild weiter verkleinert, so dass kleinere Bildsensoren und kleinere Bildverteilräder verwendet werden können und damit die ganze Kamera kleiner, leichter und handlicher baut. Dies verringert die Bildqualität in keiner Weise. Kleine Bildsensoren können die gleiche Bildpunktanzahl aufweisen wie größere. Sie sind aber erheblich preiswerter, so dass die zusätzlichen Kosten für die Zwischenoptik evtl. kompensiert werden können. Sie sind zwar weniger lichtempfindlich als größere Bildsensoren, dies wird aber dadurch kompensiert, dass die Lichtintensität auf den Sensoren durch die Verkleinerung entsprechend erhöht wird. Auch bleibt die vom Blendenwert abhängige Schärfentiefe wie bei einer speziell für dieses Objektiv konstruierten Kamera erhalten. Auch die Schärfe, d.h. die Anzahl Linienpaare, die das Abbild eines Objektivs abbilden kann, ist dann auf dem kleineren Bildsensor die gleiche. So können z.B. in großer Anzahl für Videokameras gefertigte Bildsensoren mit z.B. 11 mm oder 8 mm Bildkreisdiagonale verwendet werden, welche wesentlich preiswerter sind als z.B. speziell für 35 mm bzw. 16 mm Filmobjektive produzierte Bildsensoren mit Bildkreisdurchmessern von ca. 31 mm bzw. 14,5 mm.

Es bietet weiterhin Vorteile, dass die Zwischenoptik selbst Platz benötigt. Sie füllt vor allem den Platz zwischen den rotierenden Bildverteilrädern aus, so dass diese nicht aus der Kamerafront herausragen, sondern innerhalb der Kamera bleiben. Damit ist dann eine unbehinderte Handhabung der 35 mm bzw. 16 mm Objektive gewährleistet.

Es wird vorgeschlagen, diese Zwischenoptik austauschbar zu machen, so dass mittels mehrerer Zwischenoptiken unterschiedliche Objektiv-Kategorien verwendet werden können. Die Zwischenoptik bleibt dann zwar unverzichtbarer Bestandteil der Kamera, da diese sonst unbrauchbar wird, aber es können dann z.B. wahlweise Objektive für das 35 mm oder 16 mm Filmformat als auch Objektive für Fotoapparate etc. verwendet werden.

Im folgenden wird nun beschrieben, wie eine Ausgestaltung der erfindungsgemäßen Kamera bzw. des erfindungsgemäßen Verfahrens zur Erhöhung der Bildschärfe durch relativen Versatz der Bildsensoren zueinander bei Bildsensoren, welche vor jedem Sensor-Pixel einen Farbfilter aufweisen (bspw. Bayer-Sensoren) führt.

Solange es für Laufbildkameras noch keine schnellen hochauflösenden Bildsensoren mit z.B. 1920x1080 Bildpunkten gibt, welche an jeder Pixelposition alle drei Grundfarben blau, grün und rot getrennt registrieren können, müssen für eine erfindungsgemäße hochauflösende Kamera Bildsensoren mit vor jedem einzelnen Pixel vorgeschaltetem Farbfilter verwendet werden. Aus den Bilddaten jeweils mehrerer benachbarter Pixel werden dann von der Bildverarbeitung 75 die drei Grundfarben eines Bildpixels ermittelt. Das Zwischenbild weist dann eine deutlich geringere Schärfe auf, als dies bei den je Pixel jeweils alle Farben registrierenden Sensoren der Fall wäre.

Es wird vorgeschlagen, das Vorhandensein von zwei oder drei Bildsensoren mit Farbfiltern vor jedem Pixel zur Schärfeerhöhung auszunutzen. Bei Kameras mit zwei Bildsensoren 61 und 62 wird vorgeschlagen, die Bildsensoren gegeneinander um 1 Bildzeile zu verschieben. In dem Helligkeitsbereich, in dem beide Sensoren zum Ergebnisbild beitragen, kann dann die Bildschärfe erheblich erhöht werden. Typische Bildsensoren verwenden z.B. in den ungeradzahligen Bildzeilen Farbfilter in der Reihenfolge blau, grün, blau, grün, etc. und in den geradzahligen Bildzeilen grün, rot, grün, rot, etc. Wird ein Ergebnisbild aus den Daten beider Sensoren zusammengesetzt, sind dann je Bildpunkt abwechselnd die Farben grün+blau bzw. grün+rot bekannt. Da das Grünfilter auch einen gewissen Anteil blau und rot durchlässt und das Blaufilter und Rotfilter jeweils einen gewissen Anteil grün, kann für jede Bildpunktposition die fehlende dritte Farbe mit hoher Genauigkeit errechnet werden, ohne auf schärfemindernde Farbinformation von Nachbarbildpunkten zurückgreifen zu müssen.

Bei Kameras mit drei Bildsensoren 61, 62 und 63, welche zur Registrierung eines extremen Kontrastumfangs vorgesehen sind, wird vorgeschlagen, den Bildsensor 62 für den mittleren Helligkeitsbereich in der Höhe um 1 Bildzeile gegenüber den beiden anderen Sensoren zu verschieben.

Weiterhin wird bei einer derartigen Kamera mit drei Bildsensoren, bei welcher der Sensor 63 nicht zur Kontrasterhöhung, sondern ausschließlich zur Schärfeerhöhung verwendet und für den gleichen Helligkeitsbereich wie Sensor 62 optimiert ist, vorgeschlagen, den Sensor 63 in der Höhe um 1 Bildzeile gegenüber dem Sensor 62 zu verschieben und den Sensor 61 in der Höhe und seitlich um jeweils einen halben Pixelabstand gegenüber Sensor 62. Aus den Daten von Sensor 62 und 63 kann dann ein sich über deren ganzen Helligkeitsbereich erstreckendes scharfes Bild ermittelt werden.

Für Sensor 61 werden für die Ermittlung seiner Zwischenbildpunkte vorzugsweise Positionen gewählt, welche jeweils an der Berührstelle von vier Pixel liegen. Es ergeben sich dann für jeden Zwischenbildpunkt besonders einfache Rechenvorgänge und geringe Artefakte, da jeder Zwischenbildpunkt aus den nur jeweils ein halbes Pixel entfernten zwei Grünpixel, einem Rotpixel und einem Blaupixel ermittelt wird. Die Zwischenbildpunkte fallen dann aufgrund des Sensorversatzes wieder mit den aus Sensor 62 und 63 ermittelten Zwischenbildpunkten zusammen. Aus je zwei dieser Zwischenbildpunkte der Sensoren 61 bzw. 62 und 63 wird dann ein einziger Ergebnisbildpunkt für das Ergebnisbild 78 ermittelt.

Zur Erhöhung der Bildschärfe und Farbauflösung sind bevorzugte Ausführungsformen der erfindungsgemäßen digitalen Kamera oder des erfindungsgemäßen Verfahrens mit zwei oder drei Vollfarb-Bildsensoren gemäß Figuren 1, 2 und 3, welche Objektive für herkömmliche Strahlenteilerprismen zur Bildverteilung auf drei einfarbig registrierende Bildsensoren verwenden können, vorgesehen.

Diese Objektive sind so konstruiert, dass sie einerseits die von einem jeden Prisma verursachten Abbildungsfehler ausgleichen und andererseits die Farbanteile blau, grün und rot des von ihnen erzeugten Abbildes des erfassten aufzunehmenden Bildausschnitts nicht in ein und derselben Ebene abbilden, so wie dies bei Objektiven für chemischen Film der Fall ist. So existiert z.B. eine Norm für Objektive für hochauflösende Prismen-Kameras, gemäß der der Blauanteil um 5 µm und der Rotanteil um 10 µm hinter dem Grünanteil abgebildet werden. Dies führt natürlich bei den vorgesehenen Bildsensoren, welche alle Farben in praktisch ein und derselben Ebene registrieren, zu Unschärfen. Zur Vermeidung dieser Unschärfen sollten daher speziell konstruierte Objektive verwendet werden. Da es aber sehr vorteilhaft ist, wenn eine Prismen-Kamera gemäß einer Ausführungsform der erfindungsgemäßen Kamera alle bereits existierenden, für die bisherigen Prismen-Kameras konstruierten, Objektive verwenden kann, wird vorgeschlagen, ein spezielles Prisma vorzusehen, welches die drei Farbebenen des Abbildes an allen Bildausgängen des Prismas wieder in einer Bildebene abbildet.

Bei Verwendung eines elektronischen Suchers sollte dieser vorzugsweise zumindest die wohl wichtigste Eigenschaft eines optischen Suchers aufweisen, nämlich die Anzeige des den aufzuzeichnenden Bildausschnitt umgebenden Umfelds, so dass z.B. während einer Aufnahme rechtzeitig die Gefahr erkannt werden kann, ob sich ein unerwünschtes Objekt, wie ein Mikrofon, in den aufgezeichneten Bildausschnitt geraten würde etc. Hierzu kann z.B. ein Bildsensor eingesetzt werden, welcher einen größeren Bildausschnitt erfasst, als für die Aufzeichnung verwendet wird. Der gesamte von den Bildsensoren erfasste Bildausschnitt wird dann nach entsprechender Bildverarbeitung an den Sucher geleitet und ein kleinerer, dem aufzuzeichnenden Bildformat entsprechender, zentraler Bereich an die Aufzeichnungseinheit der Kamera geleitet.

### Bezugszeichenliste

- 1; 1'; 1''; 2; 3: Digitalkamera
- 10: Objektiv
- 11: Zwischenoptik
- 12, 13, 14: Filter
- 19: optisches Bauteil
- 23, 24: Blende
- 25: Motor
- 26, 27, 28: Verschluss
- 30, 30', 30'': Prisma
- 31: Spiegelrad
- 32, 33: Spiegelzahnrad
- 41: Mattscheibe
- 42: Rahmen
- 44: optisches Bauteil
- 45: Okular
- 46: Display
- 50: Kamerasteuerungseinrichtung
- 61, 62, 63: Bildsensoren
- 71, 72, 73: Zwischenbild
- 75: Bildverarbeitungseinrichtung
- 78: Ergebnisbild
- 81, 82, 83: weitere Einrichtungen

## Patentansprüche

1. Verfahren zur Aufnahme eines Bildes mit einer Digitalkamera (1; 1'; 1"; 2; 3), wobei ein von einem Objektiv (10) erfasstes Bild über einen Bildverteiler (30; 30'; 30"; 31; 32, 33) auf wenigstens zwei optoelektronische Bildsensoren (61, 62, 63) projiziert wird, von denen im wesentlichen gleichzeitig oder nacheinander wenigstens zwei Zwischenbilder (71, 72, 73) erzeugt werden,
**dadurch gekennzeichnet, dass**
von den wenigstens zwei optoelektronischen Bildsensoren (61, 62, 63) wenigstens zwei nicht identische Vollfarb-Zwischenbilder erzeugt werden.

2. Verfahren nach Anspruch 1, **dadurch gekennzeichnet, dass** wenigstens zwei Zwischenbilder (71, 72, 73) zu einem Ergebnisbild (78) verarbeitet werden.

3. Verfahren nach einem der vorstehenden Ansprüche, **dadurch gekennzeichnet, dass** das Ergebnisbild (78) und/oder wenigstens ein Zwischenbild (71, 72, 73) weiteren Einrichtungen (81, 82, 83), insbesondere innerhalb der Digitalkamera (1; 1'; 1"; 2; 3), zur Verfügung gestellt wird, insbesondere Einrichtungen zur Speicherung und/oder Aufzeichnung, zur Darstellung in einer Anzeige, insbesondere Sucheranzeige (83).

4. Verfahren nach einem der vorstehenden Ansprüche, **dadurch gekennzeichnet, dass** wenigstens zwei Zwischenbilder (71, 72, 73) mit unterschiedlichen Helligkeitswerten erzeugt werden.

5. Verfahren nach einem der vorstehenden Ansprüche, **dadurch gekennzeichnet, dass** wenigstens zwei Zwischenbilder (71, 72, 73) mit unterschiedlichen Ausschnitten des erfassten Bildes erzeugt werden.

6. Verfahren nach einem der vorstehenden Ansprüche, **dadurch gekennzeichnet, dass** mehrere Bilder in zeitlicher Abfolge aufgenommen werden.

7. Verfahren nach einem der vorstehenden Ansprüche, **dadurch gekennzeichnet, dass** Sensoren (61, 62, 63) mit im wesentlichen identischen Parametern verwendet werden.

8. Digitalkamera (1; 1'; 1"; 2; 3) zur Aufnahme eines von einem Kameraobjektiv (10) erfassten Bildes zur Durchführung eines Verfahrens nach einem der Ansprüche 1 bis 7.

9. Digitalkamera (1; 1'; 1"; 2; 3) mit wenigstens zwei optoelektronischen Bildsensoren (61, 62, 63), von denen im wesentlichen gleichzeitig oder nacheinander wenigstens zwei Zwischenbilder (71, 72, 73) erzeugbar sind, einem Bildverteiler (30; 30'; 30"; 31; 32, 33) zum Projizieren des erfassten Bildes auf die wenigstens zwei optoelektronischen Bildsensoren (61, 62, 63), einer Bildverarbeitungseinrichtung (75) zur Erzeugung eines Ergebnisbildes (78) aus wenigstens zwei Zwischenbildern (71, 72, 73), zur Speicherung und/oder Aufzeichnung des Ergebnisbildes und/oder der Zwischenbilder und/oder zur Darstellung des Ergebnisbildes und/oder eines Zwischenbildes in einer Anzeige, wobei von den wenigstens zwei optoelektronischen Bildsensoren (61, 62, 63) wenigstens zwei nicht identische Vollfarb-Zwischenbilder erzeugbar sind.

10. Digitalkamera (1; 1'; 1"; 2; 3) nach Anspruch 8 oder 9, **dadurch gekennzeichnet, dass** von den wenigstens zwei optoelektronischen Bildsensoren (61, 62, 63) wenigstens zwei Zwischenbilder (71, 72, 73) mit unterschiedlichen Helligkeitswerten erzeugbar sind.

11. Digitalkamera (1; 1'; 1"; 2; 3) nach einem der Ansprüche 8 bis 10, **dadurch gekennzeichnet, dass** von den wenigstens zwei optoelektronischen Bildsensoren (61, 62, 63) wenigstens zwei Zwischenbilder (71, 72, 73) mit unterschiedlichen Ausschnitten des erfassten Bildes erzeugbar sind.

12. Digitalkamera (1; 1'; 1"; 2; 3) nach einem der Ansprüche 8 bis 11, **dadurch gekennzeichnet, dass** der Bildverteiler als Prisma (30; 30'; 30'') mit wenigstens zwei Bildausgängen ausgebildet ist.

13. Digitalkamera (1; 1'; 1"; 2; 3) nach einem der Ansprüche 8 bis 11, **dadurch gekennzeichnet, dass** der Bildverteiler als ein rotierendes Spiegelrad (31) mit einer vorgebbaren Anordnung und Anzahl von aufeinander folgenden Spiegelsegmenten und Lückensegmenten ausgebildet ist.

14. Digitalkamera (1; 1'; 1"; 2; 3) nach einem der Ansprüche 8 bis 11, **dadurch gekennzeichnet, dass** der Bildverteiler als zwei synchron rotierende und mit verspiegelten Zähnen berührungslos ineinander greifende Zahnräder (32, 33) ausgebildet ist.

15. Digitalkamera (1; 1'; 1"; 2; 3) nach einem der Ansprüche 8 bis 14, **dadurch gekennzeichnet, dass** ein insbesondere rotierender Verschluss (26, 27, 28) zwischen dem Objektiv (10) und den wenigstens zwei optoelektronischen Bildsensoren (61, 62, 63) vorgesehen ist.

16. Digitalkamera (1; 1'; 1"; 2; 3) nach einem der Ansprüche 8 bis 15, **dadurch gekennzeichnet, dass** wenigstens eine rotierbare, feste oder verstellbare Blende (23, 24), insbesondere Sektorblende, zur Einstellung der Belichtung der Bildsensoren (61, 62, 63) vorgesehen ist.

17. Digitalkamera (1; 1'; 1"; 2; 3) nach einem der Ansprüche 8 bis 16, **dadurch gekennzeichnet, dass** wenigstens eine Zwischenoptik (11) zwischen dem Objektiv (10) und den wenigstens zwei optoelektronischen Sensoren (61, 62, 63) vorgesehen ist.

18. Digitalkamera (1; 1'; 1"; 2; 3) nach einem der Ansprüche 8 bis 17, **dadurch gekennzeichnet, dass** eine Steuereinrichtung (50) zur Steuerung der wenigstens zwei optoelektronischen Bildsensoren (61, 62, 63) und/oder der rotierenden Verschlüsse (25, 26, 27) und/oder der wenigstens einen Blende (23, 24) vorgesehen ist.
